Europäisches Patentamt

European Patent Office

Office européen des brevets

(19)

(11) Numéro de publication : **0 041 691**

**B1**

(12)

# FASCICULE DE BREVET EUROPÉEN

(45) Date de publication du fascicule du brevet :
14.09.83

(51) Int. Cl.³ : **B 60 K 31/00**

(21) Numéro de dépôt : 81104268.8

(22) Date de dépôt : 03.06.81

(54) Dispositif de limitation de vitesse pour véhicule propulsé par moteur à combustion interne.

(30) Priorité : 05.06.80 FR 8012509

(43) Date de publication de la demande :
16.12.81 Bulletin 81/50

(45) Mention de la délivrance du brevet :
14.09.83 Bulletin 83/37

(84) Etats contractants désignés :
BE DE FR GB IT NL SE

(56) Documents cités :
US A 3 861 490
US A 4 176 633
US A 4 199 039

(73) Titulaire : REGIE NATIONALE DES USINES RENAULT
Boîte postale 103 8-10 avenue Emile Zola
F-92109 Boulogne-Billancourt (FR)

(72) Inventeur : Tchang, Takiang
11, rue de la Porte Jaune
F-92380 Garches (FR)
Inventeur : Guicherd, Christian
6, avenue Pasteur Martin Luther King
F-78230 Le Pecq (FR)

(74) Mandataire : Casalonga, Axel et al
BUREAU D.A. CASALONGA OFFICE JOSSE & PETIT
Baaderstrasse 12-14
D-8000 München 5 (DE)

Dispositif de limitation de vitesse pour véhicule propulsé par moteur à combustion interne

La présente invention se rapporte à un dispositif de limitation de vitesse pour véhicule propulsé par un moteur à combustion interne, en particulier à allumage commandé, soit à carburateur, soit à dispositif d'injection de combustible. Ce dispositif est notamment destiné à limiter la vitesse maximale d'un véhicule tout en assurant la pleine puissance du moteur lors des phases d'accélération.

Afin d'obtenir la puissance maximale à pleine charge et l'économie de combustible aux faibles charges, il est connu d'utiliser un carburateur à double corps (ou un boîtier à deux papillons pour les moteurs à injection d'essence), dans lequel le premier papillon est commandé directement par la pédale d'accélérateur tandis que le deuxième papillon ne s'ouvre qu'à partir d'une certaine charge. Dans une forme de réalisation classique, l'ouverture du deuxième papillon est commandée par une liaison articulée entre les leviers de papillons.

On connaît par ailleurs, notamment par le brevet US 4 199 039, un carburateur à double corps comprenant deux papillons solidaires en rotation d'un axe commun commandé par la pédale d'accélérateur. Ce carburateur est équipé d'un dispositif limiteur de vitesse comprenant un mécanisme de liaison élastique associé audit axe commun des papillons et une valve à dépression tarée à une valeur donnée de dépression correspondant à une vitesse du véhicule à ne pas dépasser et adaptée pour actionner, au-delà de cette vitesse donnée, dans le sens de la fermeture, les deux papillons. Toutefois, dans ce type de carburateur, les deux papillons sont ouverts ou fermés simultanément de sorte qu'il ne permet pas de satisfaire à l'exigence d'économie de combustible aux faibles charges.

L'invention vise à réaliser un dispositif limiteur de vitesse à valve à dépression tarée qui puisse être utilisé avec un carburateur ou un boîtier à deux papillons conforme à la forme de réalisation classique précitée à liaison articulée entre les deux leviers de papillons sans modification de la cinématique des deux papillons en deçà de la vitesse limite.

A cet effet, l'invention a pour objet un dispositif limiteur de vitesse pour véhicule propulsé par moteur à combustion interne pourvu d'un carburateur double corps ou d'un boîtier d'injection double comprenant deux papillons commandés par la pédale d'accélérateur du véhicule par l'intermédiaire d'un mécanisme d'actionnement, un mécanisme de liaison élastique associé à l'un au moins desdits papillons, et une valve à dépression tarée à une valeur donnée de dépression correspondant à une vitesse du véhicule à ne pas dépasser et adaptée pour actionner, au-delà de ladite vitesse donnée, dans le sens de la fermeture, l'un au moins desdits papillons associé audit mécanisme de liaison élastique, caractérisé en ce que ledit mécanisme de liaison élastique est interposé entre lesdits papillons, dont l'un est asservi aux mouvements de la pédale d'accélérateur, et comprend un ressort de raideur appropriée pour solidariser lesdits papillons en rotation dans le sens de l'ouverture en deçà de ladite vitesse donnée, et pour céder et autoriser la fermeture de l'autre papillon par la valve à dépression au-delà de ladite vitesse donnée.

D'autres caractéristiques et avantages de l'invention apparaîtront à la lecture de la description suivante de deux formes de réalisation non limitatives de dispositif limiteur de vitesse, en référence au dessin annexé dans lequel :

la figure 1 est une vue schématique, avec arrachement partiel, d'une première forme de réalisation de dispositif limiteur de vitesse selon l'invention, appliqué à un carburateur double-corps représenté dans la position fermée des deux papillons ;

la figure 2 est une vue schématique partielle en plan du dispositif limiteur de vitesse de la figure 1 ;

la figure 3 est une vue analogue à la figure 1 montrant le carburateur dans la position d'ouverture complète des papillons ;

la figure 4 est une vue analogue à la figure 3 montrant le carburateur dans la position où l'un des papillons est partiellement fermé par le dispositif limiteur en raison d'un dépassement de la vitesse limite ;

la figure 5 est une vue analogue à la figure 1 d'une deuxième forme de réalisation de dispositif limiteur de vitesse suivant l'invention ; et

la figure 6 est une vue analogue à la figure 3 représentant le dispositif limiteur de vitesse de la figure 5 dans la position d'ouverture complète des papillons.

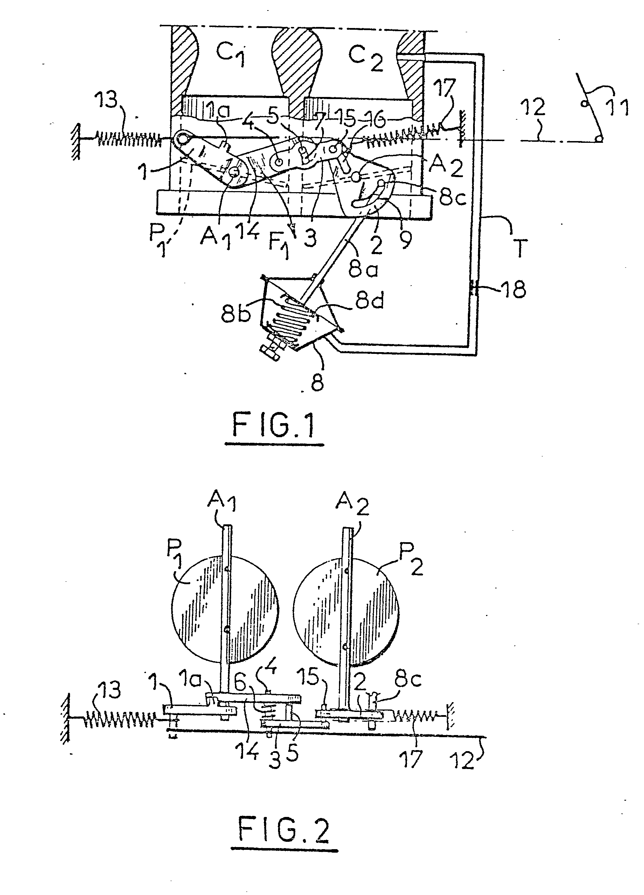

En se référant aux figs. 1 et 2, le carburateur à double corps $C_1$, $C_2$ représenté comprend deux papillons $P_1$ et $P_2$ respectivement commandés à l'ouverture et à la fermeture par des axes $A_1$ et $A_2$ solidaires respectivement de leviers 1 et 2.

Le levier 1 est relié à la pédale d'accélérateur 11 par un câble 12 et est sollicité dans la position fermée du papillon $P_1$ par un ressort 13. Le levier 1 comporte une butée 1a adaptée pour coopérer avec un levier 14 monté à rotation sur l'axe $A_1$.

Une biellette 3 est articulée sur le levier 14 autour d'un axe 4. Cette biellette 3 présente une lumière 7 dans laquelle fait saillie un doigt d'entraînement 5 solidaire du levier 14. Un ressort spiral 6 monté entre le levier 14 et la biellette 3 sollicite cette dernière en rotation autour de l'axe 4 dans le sens de la flèche $F_1$, la position normale de la biellette 3 par rapport au levier 14 représentée à la figure 1 étant définie par l'appui du doigt 5 contre le bord supérieur de la lumière 7.

La biellette 3 présente à son extrémité opposée à l'axe 4 un doigt 15 engagé dans une lumière 16 du levier 2. Le levier 2 est sollicité dans la position fermée du papillon $P_2$ par un ressort 17. La raideur du ressort 6 est telle que le couple exercé par celui-ci est supérieur au couple de rappel du levier 2 par le ressort 17. Ainsi, lorsque la butée 1a du levier 1 vient en appui contre le levier 14, la poursuite du mouvement de rotation de ce dernier dans le sens de la flèche $F_1$ entraîne la rotation en sens contraire du levier 2 autour de son axe $A_2$ par l'intermédiaire de la biellette 3 faisant bloc avec le levier 14 grâce au ressort 6.

Une valve à dépression 8 comporte une membrane 8d soumise d'un côté à la pression atmosphérique et de l'autre à la dépression régnant au col du venturi du corps $C_2$ par un conduit T dans lequel est interposé un étranglement 18. En variante, la valve 8 peut être reliée au col du venturi du corps $C_1$ ou à la fois aux cols des venturi des corps $C_1$ et $C_2$. Cette valve à dépression 8 est montée de façon que l'extrémité coudée 8c de sa tige 8a s'engage dans une lumière 9 ménagée dans le levier 2 du deuxième papillon $P_2$. Le ressort 8b de la valve 8 est taré à la dépression qui règne au niveau du col du venturi du corps $C_2$ à la vitesse donnée à laquelle on souhaite limiter le véhicule, de sorte que la valve 8 n'est actionnée que lorsque cette vitesse donnée est atteinte.

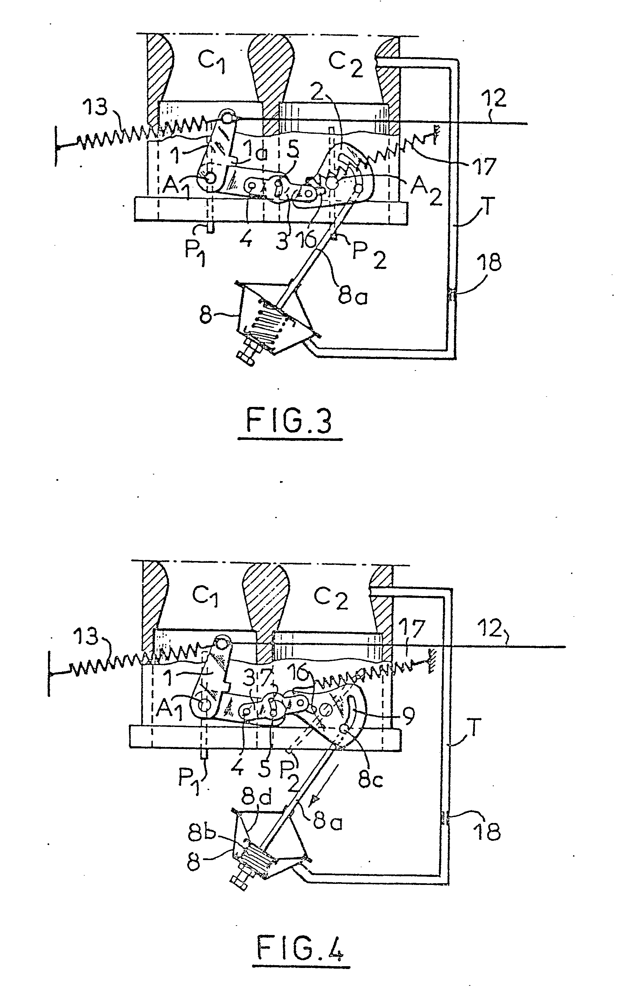

Dans la position relâchée de la pédale d'accélérateur 11 représentée à la figure 1, les papillons $P_1$ et $P_2$ sont maintenus fermés par les ressorts 13 et 17 respectivement. Lorsqu'on commence à accélérer, le câble 12 fait tourner le levier 1 dans le sens de la flèche $F_1$, ouvrant ainsi progressivement le papillon $P_1$. De son côté le papillon $P_2$ reste fermé jusqu'à ce que la butée 1a du levier 1 vienne en appui contre le levier 14, permettant jusque là un fonctionnement économique en combustible du véhicule. A partir de cet instant, si l'on continue à enfoncer la pédale d'accélérateur, la butée 1a du levier 1 entraîne le levier 14 qui, à son tour, entraîne le levier 2 par l'intermédiaire de la biellette 3 solidaire du levier 14 comme indiqué précédemment. Ce mouvement peut se poursuivre jusqu'à la position de pleine ouverture des papillons $P_1$ et $P_2$ représentée à la figure 3.

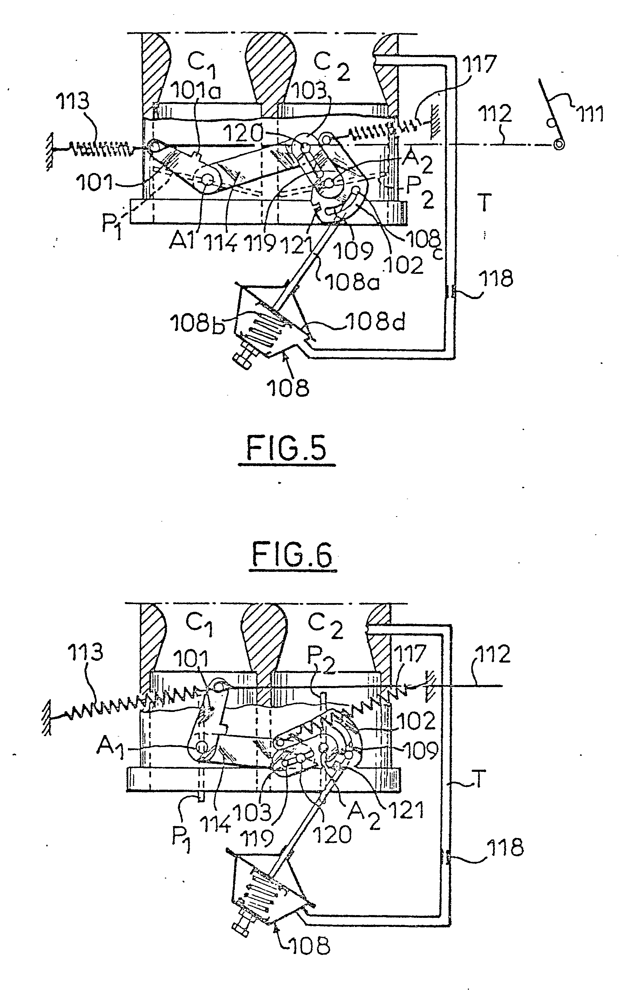

Lorsque le véhicule atteint la vitesse limite donnée à ne pas dépasser, la valve 8 actionnée par la dépression attire la tige 8a dont l'extrémité 8c, alors arrivée en butée contre le bord inférieur de la lumière 9 par suite de la rotation antérieure du levier 2, fait tourner ce dernier dans le sens de la fermeture du papillon $P_2$. Au cours de ce mouvement, le levier 2 repousse le doigt 15 et fait tourner la biellette 3 autour de son axe 4 en comprimant le ressort 6. Ce mouvement se poursuit, sans modifier la position du papillon $P_1$ maintenu grand ouvert par la pédale d'accélérateur 11, jusqu'à ce que le bord inférieur de la lumière 7 de la biellette 3 vienne en butée contre le doigt 5 du levier 14, alors immobilisé par la butée 1a. Le papillon $P_2$ occupe alors la position partiellement fermée de la figure 4 et limite la vitesse du véhicule même si le papillon $P_1$ est maintenu grand ouvert par la pédale d'accélérateur 11. En variante, la longueur de la lumière 7 et la course de la tige 8a peuvent être choisies suffisamment longues pour assurer la fermeture complète du papillon $P_2$.

Lorsqu'on accélère brutalement en enfonçant à fond la pédale d'accélérateur tandis que le véhicule roule à une vitesse inférieure à la vitesse limite à ne pas dépasser, les deux papillons $P_1$, $P_2$ s'ouvrent complètement car la biellette 3 et le levier 1, solidarisés par le doigt 5 et la force du ressort 6, agissent comme un seul levier, ce qui se traduit par la pleine puissance du moteur. Si, au cours de cette accélération, le véhicule atteint la vitesse limite, le papillon $P_2$ ne se referme pas immédiatement car l'étranglement 18 retarde l'application à la valve 8 de la dépression régnant au col du venturi du corps $C_2$. Ceci permet par conséquent de dépasser temporairement la vitesse limite et d'assurer en toute sécurité le dépassement d'autres véhicules. Pour cette raison, et bien qu'il ne soit pas indispensable, la présence de l'étranglement 18 est préférable.

On se référera maintenant aux figures 5 et 6 qui représentent un dispositif limiteur de vitesse suivant une seconde forme de réalisation de l'invention et sur lesquelles les mêmes numéros de référence que sur les figures 1 à 4, mais augmentés du nombre 100, ont été utilisés pour désigner des pièces analogues.

Suivant cette variante, la biellette 103 est articulée sur le levier 102 autour de l'axe $A_2$ au lieu de l'être sur le levier 114. Les lumières 7 et 16 sont supprimées et remplacées par une lumière 119 ménagée dans la biellette 103 et dans laquelle est engagé un doigt 120 solidaire du levier 114. Le levier 102 et la biellette 103 sont rendus solidaires à l'ouverture des papillons par un ressort (non représenté) jouant un rôle analogue au ressort 6 de la première forme de réalisation et adapté pour être comprimé lors de la fermeture du deuxième papillon $P_2$ par la valve à dépression 108. Enfin, le levier 102 comporte une butée 121 qui coopère avec la biellette 103 pour limiter le degré de fermeture du papillon $P_2$ par la valve à dépression 108.

Le fonctionnement du limiteur de vitesse des figures 5 et 6 est analogue à celui du limiteur des figures 1 à 4 et la description n'en sera donc pas reprise. On notera simplement que, lorsque la valve à dépression 108 est actionnée par la dépression régnant au col du venturi du corps $C_2$, le mouvement de fermeture du papillon $P_2$ est limité par la venue en appui de la butée 121 contre la biellette 103.

Il est clair que la présente invention n'est nullement limitée à la forme de réalisation décrite ci-dessus. C'est ainsi, en particulier, qu'en ce qui concerne les moteurs à injection d'essence, le même dispositif peut être appliqué aux boîtiers à doubles papillons. Par ailleurs, on notera également que le dispositif limiteur de vitesse suivant l'invention pourrait être appliqué à des moteurs à carburateur double corps ou à boîtier d'injection à deux papillons dans lesquels les deux papillons sont commandés non pas avec un retard à l'ouverture de l'un par rapport à l'autre, mais simultanément.

Revendications

1. Dispositif limiteur de vitesse pour véhicule propulsé par moteur à combustion interne pourvu d'un carburateur double corps ou d'un boîtier d'injection double comprenant deux papillons ($P_1$, $P_2$) commandés par la pédale d'accélérateur (11) du véhicule par l'intermédiaire d'un mécanisme d'actionnement, un mécanisme de liaison élastique associé à l'un au moins desdits papillons, et une valve à dépression (8, 108) tarée à une valeur donnée de dépression correspondant à une vitesse du véhicule à ne pas dépasser et adaptée pour actionner, au-delà de ladite vitesse donnée, dans le sens de la fermeture, l'un au moins desdits papillons associé audit mécanisme de liaison élastique, caractérisé en ce que ledit mécanisme de liaison élastique (3-7, 15, 103, 119, 120) est interposé entre lesdits papillons ($P_1$, $P_2$), dont l'un ($P_1$) est asservi aux mouvements de la pédale d'accélérateur, et comprend un ressort (6) de raideur appropriée pour solidariser lesdits papillons ($P_1$, $P_2$) en rotation dans le sens de l'ouverture en deçà de ladite vitesse donnée, et pour céder et autoriser la fermeture de l'autre papillon ($P_2$) par la valve à dépression (8, 108) au-delà de ladite vitesse donnée.

2. Dispositif selon la revendication 1, dans lequel ledit mécanisme d'actionnement comprend un premier levier (1) solidaire du premier papillon ($P_1$) asservi aux mouvements de la pédale d'accélérateur (11), un second levier (2) solidaire du second papillon ($P_2$), et un troisième levier (14) coopérant avec ledit premier levier (1) pour entraîner en rotation ledit second levier (2) et ledit second papillon ($P_2$) avec un retard à l'ouverture par rapport au premier papillon ($P_1$), caractérisé en ce que ledit mécanisme de liaison élastique (3-7, 15) comprend une biellette (3) articulée sur le troisième levier (14) et présentant un doigt (15) engagé dans une lumière (16) du second levier (2), ledit ressort (6) étant disposé entre le troisième levier (14) et la biellette (3).

3. Dispositif selon la revendication 2, caractérisé en ce que ladite biellette présente une lumière (7) dans laquelle est engagé un doigt (5) du troisième levier (14).

4. Dispositif selon la revendication 1, dans lequel ledit mécanisme d'actionnement comprend un premier levier (10) solidaire du premier papillon ($P_1$) asservi aux mouvements de la pédale d'accélérateur (111), un second levier (102) solidaire du second papillon ($P_2$), et un troisième levier (114) coopérant avec ledit premier levier (101) pour entraîner en rotation ledit second levier (102) et ledit second papillon ($P_2$) avec un retard à l'ouverture par rapport au premier papillon ($P_1$), caractérisé en ce que ledit mécanisme de liaison élastique (103, 119, 120) comprend une biellette (103) articulée sur le deuxième levier (102) et présentant une lumière (119) dans laquelle est engagé un doigt (120) solidaire du troisième levier (114), ledit ressort étant disposé entre le deuxième levier (102) et la biellette (103).

5. Dispositif selon la revendication 4, caractérisé en ce que le deuxième levier (102) comprte une butée (121) coopérant avec la biellette (103) pour limiter le degré de fermeture du papillon $P_2$ par la valve à dépression (108).

6. Dispositif selon l'une quelconque des revendications 1 à 5, caractérisé en ce que la valve à dépression (8, 8a, 8b, 8c, 8d ; 108a, 108b, 108c, 108d) comporte une tige d'actionnement (8a ; 108a) dont une extrémité (8c ; 108c) est engagée dans une autre lumière (9 ; 109) ménagée dans le second levier (2 ; 102).

7. Dispositif suivant l'une quelconque des revendications 1 à 6, caractérisé en ce que le conduit (T) par lequel la dépression est appliquée à ladite valve (8 ; 108) comporte un étranglement (18 ; 118).

Claims

1. A speed limiting device for a vehicle propelled by an combustion engine fitted with a twin body carburetter or a twin injector unit comprising two butterflies ($P_1$, $P_2$) controlled by the vehicle's accelerator pedal (11) via an operating mechanism, a flexible linkage mechanism combined with at least one of the said butterflies, and a depression valve (8, 108) set for a given depression value corresponding to a vehicle speed that must not be exceeded, and designed to operate, beyond the given speed and in the closing direction, at least one of the butterflies associated with the said flexible or elastic linkage mechanism, characterized in that the said flexible linkage mechanism (3-7, 15, 103, 119, 120) is placed between the said butterflies ($P_1$, $P_2$), one of which is controlled by the movements of the accelerator pedal, and comprises a spring (6) of suitable stiffness to lock the said butterflies ($P_1$, $P_2$) together in rotation in the opening direction below the given speed, and to yield and allow the other butterfly ($P_2$) to be closed by the depression valve (8, 108) above the said given speed.

2. The device according to claim 1, in which the said operating mechanism comprises a first lever (1) fixed to the first butterfly ($P_1$) controlled by the movements of the accelerator pedal (11), a second lever (2) fixed to the second butterfly ($P_2$) and a third lever (14) working in conjunction with the said first lever (1) to drive the second lever (2) and the second butterfly ($P_2$) in rotation with an opening delay compared with the first butterfly ($P_1$), characterized in that the said flexible linkage mechanism (3-7, 15) comprises a link (3) hinged to the third lever (14) and possessing a pin (15) engaging with a slot (16) in the second lever (2), the said spring (6) being placed between the third lever (14) and the link (3).

3. The device according to claim 2, characterized in that the said link has a slot (7) which is engaged by a pin (5) on the third lever (14).

4. The device according to claim 1, in which the said operating mechanism comprises a first lever (101) fixed to the first butterfly ($P_1$) control-

led by the movements of the accelerator pedal (111), a second lever (102) fixed to the second butterfly (P₂) and a third lever (114) engaging with the said first lever (101) to drive the second lever (102) and the second butterfly (P₂) in rotation with an opening delay compared with the first butterfly (P₁), characterized in that the said flexible linkage mechanism (103, 119, 120) comprises a link (103) hinged to the second lever (102) and having a slot (119) which is engaged by a pin (120) fixed to the third lever (114), with the said spring being placed between the second lever (102) and the link (103).

5. The device according to claim 4, characterized in that the second lever (102) comprises a stop (121) engaging with the link (103) to limit the amount of closure of butterfly (P₂) by the depression valve (108).

6. The device according to any of claims 1 to 5, characterized in that the depression valve (8, 8a, 8b, 8c, 8d ; 108a, 108b, 108c, 108d) comprises an operating rod (8a ; 108a) one end of which (8c ; 108c) is engaged in another slot (9 ; 109) made in the second lever (2 ; 102).

7. The device according to any of claims 1 to 6, characterized in that the line (T) through which the depression is applied to the said valve (8 ; 108) comprises a choke (18 ; 118).

**Ansprüche**

1. Vorrichtung zur Geschwindigkeitsbegrenzung für mit Verbrennungsmotor angetriebene Fahrzeuge mit Doppelvergaser oder mit Doppeleinspritzgehäuse, enthaltend zwei vom Gaspedal (11) des Fahrzeugs mittels eines Betätigungsmechanismus betätigte Drosselklappen (P₁, P₂), einen elastischen Verbindungsmechanismus, der mit wenigstens einer der genannten Drosselklappen verbunden ist, und ein auf einen gegebenen, der nicht zu überschreitenden Höchstgeschwindigkeit des Fahrzeugs entsprechenden Unterdruckwert eingestelltes Unterdruckventil (8, 108), das darauf abgestellt ist, bei einer höheren als der vorgegebenen Geschwindigkeit wenigstens eine der genannten mit dem genannten elastischen Verbindungsmechanismus verbundene Drosselklappen im Sinne des Schliessens zu betätigen, dadurch gekennzeichnet, dass der genannte elastische Verbindungsmechanismus (3-7, 15, 103, 119, 129) zwischen den genannten Drosselklappen (P₁, P₂) angeordnet ist, von denen die eine (P₁) von den Bewegungen des Gaspedals gesteuert wird, und eine Feder (6) geeigneter Steifheit enthält, um die genannten Drosselklappen (P₁, P₂) unter der genannten vorgegebenen Geschwindigkeit im Sinne des Öffnens drehfest miteinander zu verbinden, und um nachzugeben und das Schliessen der anderen Drosselklappe (P₂) durch das Unterdruckventil (8, 108) bei einer höheren als der vorgegebenen Geschwindigkeit zuzulassen.

2. Vorrichtung gemäss Anspruch 1, in der der genannte Betätigungsmechanismus einen mit der ersten Drosselklappe (P₁), die von den Bewegungen des Gaspedals (11) gesteuert wird, verbundenen ersten Hebel (1) und einen mit der zweiten Drosselklappe (P₂) verbundenen zweiten Hebel (2) sowie einen dritten Hebel (14), der mit dem genannten ersten Hebel (1) zusammenwirkt um den genannten zweiten Hebel (2) und die genannte zweite Drosselklappe (P₂) beim Öffnen gegenüber der ersten Drosselklappe (P₁) mit Verspätung in Drehung zu versetzen, enthält, dadurch gekennzeichnet, dass der genannte elastische Verbindungsmechanismus (3-7, 15) eine an dem dritten Hebel (14) angelenkte Koppel (3) enthält, welche einen Zapfen (15) aufweist, der in ein Langloch (16) des zweiten Hebels (2) eingreift, wobei die genannte Feder (6) zwischen dem dritten Hebel (14) und der Koppel (3) angeordnet ist.

3. Vorrichtung gemäss Anspruch 2, dadurch gekennzeichnet, dass die genannte Koppel ein Langloch (7) enthält, in die ein Zapfen (5) des dritten Hebels (14) eingreift.

4. Vorrichtung gemäss Anspruch 1, in der der genannte Betätigungsmechanismus einen ersten Hebel (101), der mit der ersten Drosselklappe (P₁), die von den Bewegungen des Gaspedals (111) gesteuert wird, verbunden ist, einen zweiten Hebel (102) der mit der zweiten Drosselklappe (P₂) verbunden ist, sowie einen dritten Hebel (114) enthält, der mit dem genannten ersten Hebel (101) zusammenwirkt, um den genannten zweiten Hebel (102) und die genannte Drosselklappe (P₂) beim Öffnen mit Verspätung gegenüber der ersten Drosselklappe (P₁) in Drehung zu versetzen, dadurch gekennzeichnet, dass der genannte elastische Verbindungsmechanismus (103, 119, 120) eine an dem zweiten Hebel (102) angelenkte Koppel (103) enthält, welche ein Langloch (119) aufweist, in das ein mit dem dritten Hebel (114) fest verbundener Zapfen (120) eingreift, wobei die genannte Feder zwischen dem zweiten Hebel (102) und der Koppel (103) angeordnet ist.

5. Vorrichtung gemäss Anspruch 4, dadurch gekennzeichnet, dass der zweite Hebel (102) einen Anschlag (121) enthält, der mit der Koppel (103) zusammewirkt um den Grad des Schliessens der Drosselklappe (P₂) durch das Unterdruckventil (108) zu begrenzen.

6. Vorrichtung gemäss einem beliebigen der Ansprüche 1 bis 5, dadurch gekennzeichnet, dass das Unterdruckventil (8, 8a, 8b, 8c, 8d ; 108a, 108b, 108c, 108d) eine Betätigungsstange (8a, 108a) enthält, deren eines Ende (8c ; 108c) in ein anderes im zweiten Hebel (8c ; 108c) ausgespartes Langloch (9 ; 109) eingreift.

7. Vorrichtung gemäss einem beliebigen der vorstehenden Ansprüche 1 bis 6, dadurch gekennzeichnet, dass die Leitung (T), über die der Unterdruck auf das genannte Ventil (8 ; 108) wirkt, eine Einschnürung (18 ; 118) aufweist.

F IG.1

F IG. 2

FIG.3

FIG.4

## FIG.5

## FIG.6